# EUROPEAN PATENT SPECIFICATION

(11) **EP 2 720 151 B1**
(45) Date of publication and mention of the grant of the patent: **27.03.2019**
(21) Application number: 12801051.9
(22) Date of filing: 29.05.2012
(51) Int. Cl.: H04L 29/08, H04L 12/24

(54) **COMMUNICATION TERMINAL AND CONTENT UPDATE METHOD**
KOMMUNIKATIONSENDGERÄT UND INHALTSAKTUALISIERUNGSVERFAHREN DAFÜR
TERMINAL DE COMMUNICATION ET PROCÉDÉ DE MISE À JOUR DE CONTENU

(30) Priority: 13.06.2011 JP 2011131248
(43) Date of publication of application: 16.04.2014
(73) Proprietor: NTT DOCOMO, INC., Chiyoda-ku Tokyo 100-6150 (JP)
(72) Inventor: MURAKAMI Keiichi, Tokyo 100-6150 (JP); YAMAKI Taeko, Tokyo 100-6150 (JP)
(74) Representative: Viering, Jentschura & Partner mbB Patent- und Rechtsanwälte
(86) International application number: PCT/JP2012/063776
(87) International publication number: WO 2012/172969

(56) References cited:
- JP-A- 2000 020 423
- JP-A- 2000 174 804
- JP-A- 2000 174 804
- JP-A- 2007 067 503
- US-A1- 2003 013 430
- US-A1- 2006 288 329
- US-A1- 2008 113 656

## Description

### Technical Field

The present invention relates to a communication terminal that receives content and a content update method.

### Background Art

Access to information content on the Internet using a mobile communication terminal such as a mobile phone has become widespread, and push type services where update information of news, weather and the like are delivered from information providers to mobile communication terminals are widely used.

As this kind of technique, the following content delivery system is disclosed in Patent Literature 1. A content delivery server generates download time information based on random numbers within the range of a specified period of time. A user terminal obtains the download time information generated by the content delivery server and executes downloading of content data from the content delivery server in accordance with the time indicated by the download time information.

### Citation List

### Patent Literature

Patent Literature 1: Japanese Unexamined Patent Application Publication No. 2006-18506
According to JP 2000 174804 A, to reduce a possibility of occurrence of connection congestion, a control section controls a random number generator to generate a random number and stores the random number to a storage section as reference data. The storage section stores a designated automatic connection time entered from an operation section. An execution automatic connection time may be shifted forward or backward at random from the designated automatic connection time.

US 2008/113656 discloses a system transmitting an update time information, for example "9:00", "9:10" or "9:20", to a mobile terminal. Based on the update time information, a content update process is performed.

US 2006/288329 discloses that updates are delayed until a specified period of time after user login has completed, and are staggered slightly. The client does not immediately fetch an update as soon as the moratorium period is over. Instead, the client waits a random interval before fetching the content.

### Summary of Invention

### Technical Problem

However, in the above-described related art, content cannot be updated at the optimum time according to the type of content. For example, weather forecast content is updated based on information that is released at the fixed time everyday by the meteorological agency or the like. Thus, if the update of weather forecast content is performed in a terminal immediately after the time when information is released by the meteorological agency or the like, the information released by the meteorological agency or the like can be reflected on the content right away. In this manner, it is desirable to update content at the optimum time according to the type of content.

The present invention has been accomplished to solve the above problems and an object of the present invention is thus to provide a communication terminal and a content update method in a communication terminal that can update content at the optimum time according to the type of content.

### Solution to Problem

The problem of the invention is solved by the subject matter of the independent claims. To solve the above problem, a communication terminal according to an example includes a content storage means for storing content containing first time information indicating a specified time unit of information representing a time, a terminal information storage means for storing terminal information containing second time information indicating a time unit shorter than the specified time unit and assigned to each communication terminal, a time determination means for determining whether it has reached a time consisting of the first time information and the second time information, and a content update means for performing a content update process when the time determination means determines that it has reached a time consisting of the first time information and the second time information.

Likewise, to solve the above problem, a content update method in a communication terminal according to an example includes a content storage step of storing content containing first time information indicating a specified time unit of information representing a time, a terminal information storage step of storing terminal information containing second time information indicating a time unit shorter than the specified time unit and assigned to each communication terminal, a time determination step of determining whether it has reached a time consisting of the first time information and the second time information, and a content update step of performing a content update process when the time determination means determines that it has reached a time consisting of the first time information and the second time information.

According to an example, content containing first time information indicating a specified time unit of information representing a time is stored, and, using the first time information, it is determined that it has reached a time to perform a content update process. It is thereby possible to update content at the optimum time period according to the type of content. Further, second time information stored in the terminal information storage means is assigned to each communication terminal. Thus, the content update process is not performed at the same time among many terminals, and a load on a network or a content delivery server is reduced.

Further, the communication terminal according to an example may further include a communication state determination means for determining whether the communication terminal is in a communication-enabled state, a random number generation means for generating random numbers, and a waiting time decision means for deciding a waiting time within a specified length of time based on the random numbers generated by the random number generation means, and, in a case where the communication state determination means determines that the communication terminal is in a communication-disabled state when the time determination means determines that it has reached a time consisting of the first time information and the second time information, the content update means may perform the content update process upon lapse of the waiting time decided by the waiting time decision means after the communication terminal returns to the communication-enabled state.

According to an example, a waiting time is decided within a specified length of time based on random numbers, and, the content update process is performed upon lapse of the waiting time after the communication terminal returns to the communication-enabled state. It is thereby possible to avoid that a large number of communication terminals perform the content update process at the same time, imposing a load on a network and a content delivery server. It is also possible to perform the content update process without waiting for a time consisting of the first time information and the second time information.

Further, the communication terminal according to an example may further include a communication restriction determination means, and, in a case where the communication restriction determination means determines that the communication terminal is under communication restriction when the time determination means determines that it has reached a time consisting of the first time information and the second time information, the content update means may perform the content update process upon reaching a time indicated by the second time information after the communication restriction is disabled.

According to an example, the content update process is performed upon reaching a time indicated by the second time information after the communication restriction is disabled. Thus, the content update process in each communication terminal after the communication restriction is disabled is performed at the time distributed within the range of a time unit indicated by the first time information. This reduces a load on a network or a content delivery server that is caused by the concentrated occurrence of the update process after the communication restriction is disabled.

### Advantageous Effects of Invention

According to the present invention, it is possible to update content at the optimum time according to the type of content.

### Brief Description of Drawings

Fig. 1 is a diagram showing a functional configuration of a communication terminal according to an embodiment.
Fig. 2 is a diagram showing a hardware configuration of the communication terminal according to the embodiment.
Fig. 3 is a diagram showing an example of a configuration file for setting a time period to update content.
Fig. 4 is a flowchart showing a content update process by the communication terminal according to the embodiment.

### Description of Embodiments

A preferred embodiment of a communication terminal and a content update method according to the present invention are described hereinafter with reference to the appended drawings. Note that, in the description of the drawings, the same elements are denoted by the same reference numerals, and repeated explanation thereof is omitted.

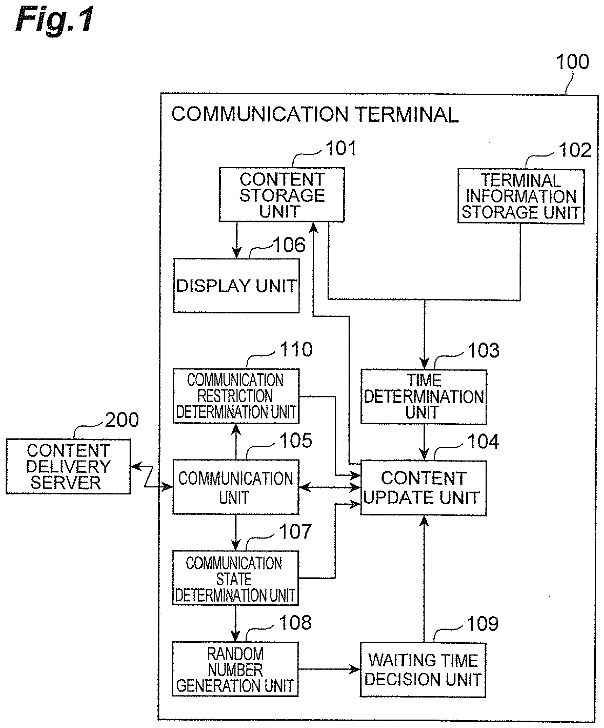

Fig. 1 shows a functional configuration of a communication terminal according to an embodiment. A communication terminal 100 according to this embodiment includes a content storage unit 101 (content storage means), a terminal information storage unit 102 (terminal information storage means), a time determination unit 103 (time determination means), a content update unit 104 (content update means), a communication unit 105, a display unit 106, a communication state determination unit 107 (communication state determination means), a random number generation unit 108 (random number generation means), a waiting time decision unit 109 (waiting time decision means), and a communication restriction determination unit 110 (communication restriction determination means).

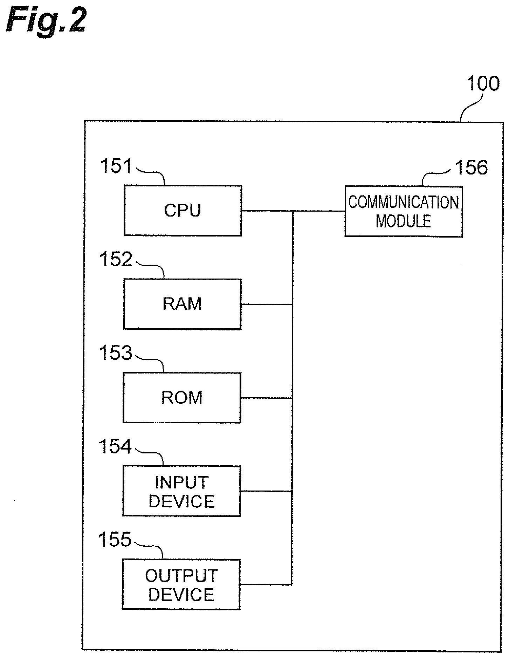

Fig. 2 shows a hardware configuration of the communication terminal 100. The communication terminal 100 is physically composed of a CPU 151, a RAM 152, a ROM 153, an input device 154, an output device 155, and a communication module 156. The functions of the communication terminal 100 shown in Fig. 1 are implemented by loading given computer software onto hardware such as the RAM 152 or the like shown in Fig. 2, making the communication module 156, the input device 154 and the output device 155 operate under control of the CPU 151, and performing data reading in the RAM 152 and the ROM 153 and data writing in the RAM 152. Each functional block is described hereinafter with reference to the functional blocks shown in Fig. 1.

The content storage unit 101 stores content delivered from a content delivery server 200. Content is information that can be displayed on a screen of the communication terminal 100. Content contains hour information indicating the longest time unit of information representing a time as first time information. In this embodiment, the length of a time period indicated by the hour information is one hour.

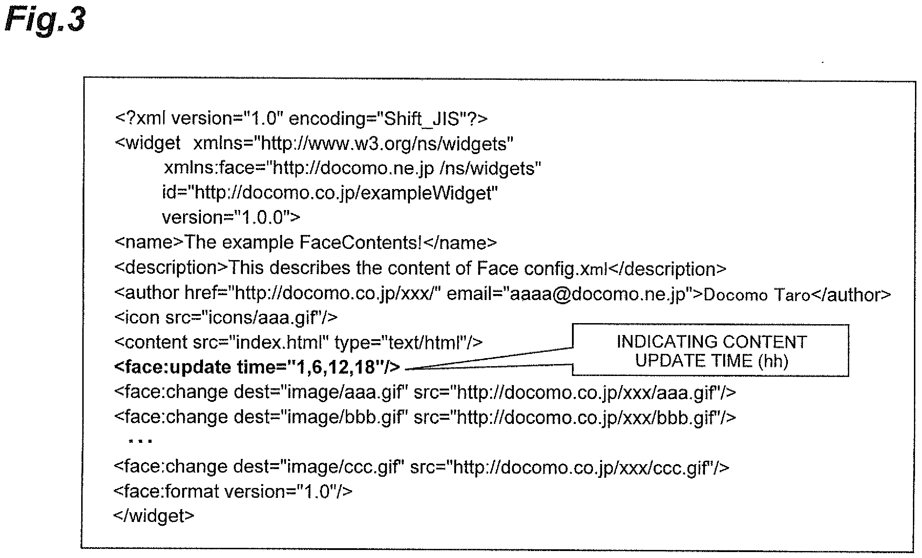

Fig. 3 shows a specific example of a file stored in the content storage unit 101. The row "<face:update time="1,6,12,18">" in the file indicates the time period of 1:00 to 1:59, 6:00 to 6:59, 12:00 to 12:59 and 18:00 to 18:59.

The terminal information storage unit 102 stores terminal information that is unique to a communication terminal. The terminal information contains minute information indicating a minute, which is a shorter time unit than the time unit indicated by the first time information, as second time information. As the minute information, values of 0 to 59 minutes are sequentially assigned to communication terminals at the time of factory shipment of the communication terminal. For example, the minute information for performing the update of content is assigned to each communication terminal, such as 0 minute specified for a certain communication terminal, one minute for another communication terminal, and two minutes for yet another communication terminal. Further, when a value that is assigned to a communication terminal reaches 59 minutes, values are sequentially assigned from 0 minute again. As a result, the minute information is assigned to each terminal without concentrating on a specific time. Note that users of communication terminals cannot change the minute information.

The time determination unit 103 determines whether it has reached a time consisting of the hour information stored in the content storage unit 101 and the minute information stored in the terminal information storage unit 102. For example, consider the case where the hour information indicating "3 o'clock" is stored in the content storage unit 101, and the minute information indicating "15 minutes" is stored in the terminal information storage unit 102. In this case, the time determination unit 103 determines whether it has reached the time "3:15" that consists of the information "3 o'clock" stored in the content storage unit 101 and the information "15 minutes" stored in the terminal information storage unit 102.

The content update unit 104 performs a content update process when the time determination unit 103 determines that it has reached a time consisting of the hour information stored in the content storage unit 101 and the minute information stored in the terminal information storage unit 102. The content update process is specifically performed as follows. First, the content update unit 104 requests the communication unit 105 to download content data. Next, the communication unit 105 downloads content data from the content delivery server 200. Then, the content update unit 104 rewrites data of the content storage unit 101 using the data downloaded by the communication unit 105.

The communication unit 105 requests the content delivery server 200 to transmit data to update content when the content update unit 104 performs the content update process. Further, the communication unit 105 receives data transmitted from the content delivery server 200 and stores the data into the content storage unit 101.

The display unit 106 displays content stored in the content storage unit 101. Thus, when the content update unit 104 updates the data of the content storage unit 101, the content displayed on the display unit 106 is updated accordingly. Note that the updated content may be always displayed or may be non-displayed and held in active state so that it can be displayed immediately in response to a user's screen change operation, read operation or the like.

The communication state determination unit 107 determines whether the communication terminal 100 is in a communication-enabled state using the communication unit 105.

The random number generation unit 108 generates random numbers. The waiting time decision unit 109 randomly decides the waiting time within the range of a specified length of time that is shorter than the time unit indicated by the first time information based on the random numbers generated by the random number generation unit 108. In this embodiment, the waiting time decision unit 109 decides the waiting time within the range of 10 minutes.

The communication restriction determination unit 110 determines whether the communication terminal 100 is under restriction of communication using the communication unit 105.

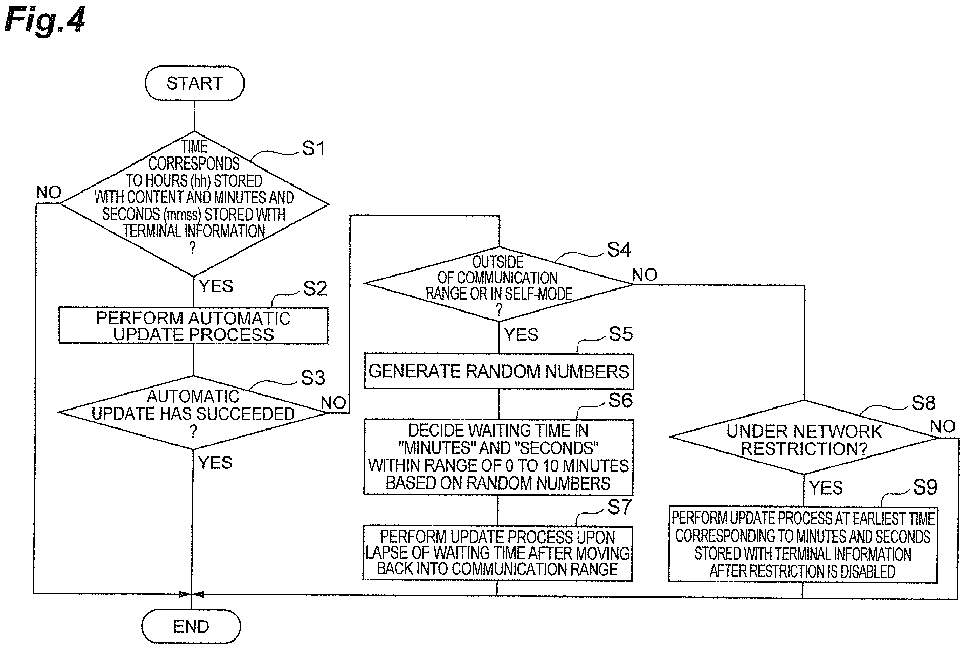

A process of the communication terminal 100 according to this embodiment is described hereinafter with reference to the flowchart of Fig. 4. Fig. 4 shows the flow of the process of the communication terminal 100 according to this embodiment. The process shown in Fig. 4 is executed repeatedly at regular intervals, i.e. every one minute. Note that the process shown in Fig. 4 is carried out on condition that a content storage step that stores content containing hour information indicating a time period and a terminal information storage step that stores terminal information containing minute information indicating a minute are already carried out.

First, the time determination unit 103 determines whether it has reached a time consisting of the hour information stored in the content storage unit 101 and the minute information stored in the terminal information storage unit 102 (Step S1: time determination step). When it is determined that it has not reached such a time (NO in Step S1), the process ends. On the other hand, when it is determined that it has reached such a time (YES in Step S1), the content update unit 104 performs an automatic update process (Step S2: content update step).

Next, the content update unit 104 determines whether the automatic update process has succeeded or not (Step S3: automatic update success/failure determination step). When it is determined that the automatic update process has succeeded (YES in Step S3), the process ends. On the other hand, when it is determined that the automatic update process has failed (NO in Step S3), the communication state determination unit 107 determines whether the communication terminal 100 is outside of communication range or in self-mode (Step S4: communication state determination step). Specifically, it is determined whether the communication terminal 100 is in a communication-disabled state or not. Note that the self-mode is mode in which the communication terminal does not transmit or receive a radio wave.

When it is determined that the communication terminal 100 is outside of communication range or in self-mode (YES in Step S4), the random number generation unit 108 performs a random number generation process (Step S5). In this case, the waiting time decision unit 109 then decides the waiting time within the range of 0 to 10 minutes based on the random numbers generated by the random number generation unit 108 (Step S6). Then, after the communication terminal 100 moves back into communication range, upon the lapse of the waiting time, the content update unit 104 performs an update process (Step S7). Note that in the case where it has reached a time consisting of the hour information stored in the content storage unit 101 and the minute information stored in the terminal information storage unit 102 before the lapse of the waiting time, the content update unit 104 may perform the content update process at the time consisting of the hour information and the minute information and not perform the content update process upon the lapse of the waiting time.

On the other hand, when it is determined that the communication terminal 100 is not outside of communication range and not in self-mode (NO in Step S4), the communication restriction determination unit 110 determines whether network restriction is enabled or not (Step S8: network restriction determination step). When it is determined that network restriction is enabled (YES in Step S9), after network restriction is disabled, the content update unit 104 performs an update process at the earliest time that corresponds to the minute information stored together with the terminal information (Step S9). On the other hand, when it is determined that network restriction is not enabled (NO in Step S9), the process ends without performing an update process.

As described above, the communication terminal 100 according to this embodiment determines, using the time determination unit 103, whether it has reached a time consisting of the hour information stored in the content storage unit 101 and the minute information stored in the terminal information storage unit 102, and when it has reached such a time, performs a content update process. Therefore, it is possible to update content at the optimum time for each type of content. Further, the minute information stored in the terminal information storage unit 102 is assigned to be different for each communication terminal. It is thus possible to prevent the minute information from being unevenly assigned among many terminals and thereby avoid that the update process occurs excessively at the same time, imposing a load on a network or a server.

Further, the communication terminal 100 according to this embodiment includes the random number generation unit 108 and the waiting time decision unit 109 that decides the waiting time within the range of 0 to 10 minutes based on random numbers generated by the random number generation unit 108, and, in the case where the communication state determination unit 107 determines that the communication terminal 100 is in the communication-disabled state when it has reached a time consisting of the time information and the minute information, the content update unit 104 performs the update process upon the lapse of the waiting time after the communication terminal 100 returns to the communication-enabled state. Therefore, the update process can be performed without waiting for a time consisting of the hour information stored in the content storage unit 101 and the minute information stored in the terminal information storage unit 102 after the communication terminal 100 returns to the communication-enabled state.

Furthermore, in the communication terminal 100 according to this embodiment, in the case where the communication restriction determination unit 110 determines that the communication terminal 100 is under communication restriction when the time determination unit 103 determines that it has reached a time consisting of the hour information stored in the content storage unit 101 and the minute information stored in the terminal information storage unit 102, the content update unit 104 performs the content update process upon reaching a time indicated by the minute information after communication restriction is disabled. Therefore, after communication restriction is disabled, the update process is distributed among the respective terminals over a relatively long period of time: one hour. A load imposed on a network or a server is thereby reduced.

While the communication terminal 100 according to this embodiment and the content update method using the communication terminal 100 are described above with reference to a preferred embodiment, the present invention is not limited to the above-described embodiment.

For example, in the above-described embodiment, a time indicated by the second time information that is stored in the terminal information storage unit 102 is in minutes. However, as the second time information, seconds may be specified in addition to minutes, or only seconds may be specified instead of minutes.

Further, for example, a time indicated by the first time information that is stored in the content storage unit 101 may be a time unit longer than one hour or a time unit shorter than one hour. In this case, a time indicated by the second time information that is stored in the terminal information storage unit 102 is assigned within the range of a time unit indicated by the first time information. Further, a time indicated by the first time information may be in minutes, and a time indicated by the second time information may be in seconds.

Further, in the above-described embodiment, the minute information is assigned to each terminal at the time of factory shipment. However, the minute information may be generated at random at the first start of a communication terminal, without assigning the minute information to the communication terminal at the time of factory shipment.

Further, in the flowchart of Fig. 4, the determination as to whether the automatic update process has succeeded or not is made in Step S3 and, when it is determined that the automatic update process has not succeeded, the determination as to whether it is outside of communication range or in self-mode is made in Step S4, and when it is determined that it is not outside of communication range and not in self-mode, the determination as to whether network restriction is enabled or not is made in Step S8. However, the determination in Step S4 may be skipped, and the determination as to whether network restriction is enabled or not in Step S8 may be made when it is determined that the automatic update process has not succeeded in Step S3.

### Reference Signs List

100...communication terminal, 101...content storage unit (content storage means), 102... terminal information storage unit (terminal information storage means), 103...time determination unit (time determination means), 104... content update unit (content update means), 105...communication unit, 106...display unit, 107... communication state determination unit (communication state determination means), 108...random number generation unit (random number generation means), 109...waiting time decision unit (waiting time decision means), 110... communication restriction determination unit (communication restriction determination means), 200...content delivery server

## Claims

1. A communication terminal (100) comprising:
a content storage means (101) for storing a content containing first time information indicating a specified time unit of information representing a time;
a terminal information storage means (102) for storing terminal information containing second time information indicating a time unit shorter than the specified time unit and assigned to the communication terminal;
a time determination means (103) for determining whether it has reached a time consisting of the first time information and the second time information; and
a content update means (104) for performing a content update process when the time determination means (103) determines that it has reached a time consisting of the first time information and the second time information;
**characterized in that**
the second time information is adapted to be assigned at the time of factory shipment of the communication terminal or generated randomly at the first start of the communication terminal;
the communication terminal further comprising:
a communication state determination means (107) for determining whether the communication terminal is in a communication-enabled state;
a random number generation means (108) for generating random numbers; and
a waiting time decision means (109) for deciding a waiting time within a specified length of time based on the random numbers generated by the random number generation means,
wherein, in a case where the communication state determination means (107) determines that the communication terminal is in a communication-disabled state when the time determination means (103) determines that it has reached a time consisting of the first time information and the second time information, the content update means (104) is adapted to perform the content update process upon lapse of the waiting time decided by the waiting time decision means (109) after the communication terminal returns to the communication-enabled state.

2. The communication terminal according to Claim 1, further comprising:
a communication restriction determination means,
wherein, in a case where the communication restriction determination means (110) determines that the communication terminal is under communication restriction when the time determination means (103) determines that it has reached a time consisting of the first time information and the second time information, the content update means (104) is adapted to perform the content update process upon reaching a time indicated by the second time information after the communication restriction is disabled.

3. A content update method in a communication terminal (100), comprising:
a content storage step of storing a content containing first time information indicating a specified time unit of information representing a time;
a terminal information storage step of storing terminal information containing second time information indicating a time unit shorter than the specified time unit and assigned to the communication terminal;
a time determination step of determining whether it has reached a time consisting of the first time information and the second time information; and
a content update step of performing a content update process when the time determination step determines that it has reached a time consisting of the first time information and the second time information;
**characterized in that**
the second time information is assigned at the time of factory shipment of the communication terminal (100) or generated randomly at the first start of the communication terminal (100);
the content update method further comprising:
a communication state determination step of determining whether the communication terminal (100) is in a communication-enabled state;
a random number generation step of generating random numbers; and
a waiting time decision step of deciding a waiting time within a specified length of time based on the random numbers generated in the random number generation step,
wherein, in a case where the communication state determination step determines that the communication terminal (100) is in a communication-disabled state when the time determination step determines that it has reached a time consisting of the first time information and the second time information, the content update step performs the content update process upon lapse of the waiting time decided by the waiting time decision step after the communication terminal (100) returns to the communication-enabled state.

## Patentansprüche

1. Ein Kommunikationsendgerät (100) aufweisend:
ein Inhaltspeichermittel (101) zum Speichern eines Inhalts mit erster Zeitinformation, die eine spezifizierte Zeiteinheit von Information, die eine Zeit repräsentiert, anzeigt;
ein Endgerätinformationsspeichermittel (102) zum Speichern von Endgerätinformation mit zweiter Zeitinformation, die eine Zeiteinheit anzeigt, die kürzer ist als die spezifizierte Zeiteinheit und dem Kommunikationsendgerät zugewiesen ist;
ein Zeitermittlungsmittel (103) zum Ermitteln, ob eine Zeit erreicht ist, die aus der ersten Zeitinformation und der zweiten Zeitinformation besteht; und
ein Inhaltaktualisierungsmittel (104) zum Durchführen eines Inhaltsaktualisierungsvorgangs, wenn das Zeitermittlungsmittel (103) ermittelt, dass die Zeit bestehend aus der ersten Zeitinformation und der zweiten Zeitinformation erreicht ist;
**dadurch gekennzeichnet, dass**
die zweite Zeitinformation eingerichtet ist, zur Zeit der Werksversendung des Kommunikationsendgeräts zugewiesen zu werden, oder die zufällig bei einem ersten Start des Kommunikationsendgeräts erzeugt wird;
wobei das Kommunikationsendgerät weiter aufweist:
ein Kommunikationszustandsermittlungsmittel (107) zum Ermitteln ob das Kommunikationsendgerät in einem für Kommunikation aktivierten Zustand ist;
ein Zufallszahlerzeugungsmittel (108) zum Erzeugen von Zufallszahlen; und
ein Wartezeitfestsetzmittel (109) zum Festsetzen einer Wartezeit innerhalb einer spezifizierten Zeitdauer basierend auf den Zufallszahlen, die durch das Zufallszahlerzeugungsmittel erzeugt werden,
wobei, in einem Fall in welchem das Kommunikationszustandsermittlungsmittel (107) ermittelt, dass das Kommunikationsendgerät in einem für Kommunikation deaktivierten Zustand ist, wenn das Zeitermittlungsmittel (103) ermittelt, dass die Zeit erreicht ist, die aus der ersten Zeitinformation und der zweiten Zeitinformation besteht, das Inhaltaktualisierungsmittel (104) eingerichtet ist, den Inhaltsaktualisierungsvorgang bei Ablauf der Wartezeit durchzuführen, die durch das Wartezeitfestsetzmittel (109) festgesetzt ist, nachdem das Kommunikationsendgerät in den für Kommunikation aktivierten Zustand zurückgekehrt ist.

2. Das Kommunikationsendgerät gemäß Anspruch 1, weiter aufweisend:
ein Kommunikationsbeschränkungsermittlungsmittel, wobei, in einem Fall in welchem das Kommunikationsbeschränkungsermittlungsmittel (110) ermittelt, dass das Kommunikationsendgerät unter Kommunikationsbeschränkung steht, wenn das Zeitermittlungsmittel (103) ermittelt, dass die Zeit erreicht ist, die aus der ersten Zeitinformation und der zweiten Zeitinformation besteht, das Inhaltaktualisierungsmittel (104) eingerichtet ist, den Inhaltsaktualisierungsvorgang bei Erreichen einer Zeit durchzuführen, die durch die zweite Zeitinformation angezeigt wird, nachdem die Kommunikationsbeschränkung deaktiviert ist.

3. Ein Inhaltaktualisierungsverfahren in einem Kommunikationsendgerät (100), aufweisend:
einen Inhaltspeicherschritt des Speicherns eines Inhalts mit erster Zeitinformation, die eine spezifizierte Zeiteinheit von Information, die eine Zeit repräsentiert, anzeigt;
einen Endgerätinformationsspeicherschritt des Speicherns von Endgerätinformation mit zweiter Zeitinformation, die eine Zeiteinheit anzeigt, die kürzer ist als die spezifizierte Zeiteinheit und dem Kommunikationsendgerät zugewiesen ist;
einen Zeitermittlungsschritt des Ermittelns, ob eine Zeit erreicht ist, die aus der ersten Zeitinformation und der zweiten Zeitinformation besteht; und
einen Inhaltaktualisierungsschritt des Durchführens eines Inhaltsaktualisierungsvorgangs, wenn der Zeitermittlungsschritt ermittelt, dass die Zeit bestehend aus der ersten Zeitinformation und der zweiten Zeitinformation erreicht ist;
**dadurch gekennzeichnet, dass**
die zweite Zeitinformation zur Zeit der Werksversendung des Kommunikationsendgeräts (100) zugewiesen wird, oder zufällig bei einem ersten Start des Kommunikationsendgeräts (100) erzeugt wird;
wobei das Inhaltaktualisierungsverfahren weiter aufweist:
einen Kommunikationszustandsermittlungsschritt des Ermittelns ob das Kommunikationsendgerät in einem für Kommunikation aktivierten Zustand ist;
einen Zufallszahlerzeugungsschritt des Erzeugens von Zufallszahlen; und
einen Wartezeitfestsetzschritt des Festsetzens einer Wartezeit innerhalb einer spezifizierten Zeitdauer basierend auf den Zufallszahlen, die in dem Zufallszahlerzeugungsschritt erzeugt werden,
wobei, in einem Fall in welchem der Kommunikationszustandsermittlungsschritt ermittelt, dass das Kommunikationsendgerät (100) in einem für Kommunikation deaktivierten Zustand ist, wenn der Zeitermittlungsschritt ermittelt, dass die Zeit erreicht ist, die aus der ersten Zeitinformation und der zweiten Zeitinformation besteht, der Inhaltaktualisierungsschritt den Inhaltsaktualisierungsvorgang bei Ablauf der Wartezeit durchführt, die durch den Wartezeitfestsetzschritt festgesetzt ist, nachdem das Kommunikationsendgerät (100) in den für Kommunikation aktivierten Zustand zurückgekehrt ist.

## Revendications

1. Terminal de communication (100) comprenant :
un moyen de stockage de contenu (101) pour stocker un contenu contenant des premières informations temporelles indiquant une unité de temps spécifiée d'informations représentant un instant ;
un moyen de stockage d'informations de terminal (102) pour stocker des informations de terminal contenant des secondes informations temporelles indiquant une unité de temps plus courte que l'unité de temps spécifiée et affectées au terminal de communication ;
un moyen de détermination de temps (103) pour déterminer s'il a atteint un instant consistant en les premières informations temporelles et les secondes informations temporelles ; et
un moyen de mise à jour de contenu (104) pour mettre en oeuvre un processus de mise à jour de contenu lorsque le moyen de détermination de temps (103) détermine qu'il a atteint un instant consistant en les premières informations temporelles et les secondes informations temporelles ;
**caractérisé en ce que** :
les secondes informations temporelles sont aptes à être affectées à l'instant d'une expédition d'usine du terminal de communication, ou générées de manière aléatoire lors du premier démarrage du terminal de communication ;
le terminal de communication comprenant en outre :
un moyen de détermination d'état de communication (107) pour déterminer si le terminal de communication est dans un état de communication activée ;
un moyen de génération de nombres aléatoires (108) pour générer des nombres aléatoires ; et
un moyen de détermination de temps d'attente (109) pour déterminer un temps d'attente sur une durée spécifiée, sur la base des nombres aléatoires générés par le moyen de génération de nombres aléatoires ;
où, dans un cas où le moyen de détermination d'état de communication (107) détermine que le terminal de communication est dans un état de communication désactivée lorsque le moyen de détermination de temps (103) détermine qu'il a atteint un instant consistant en les premières informations temporelles et les secondes informations temporelles, le moyen de mise à jour de contenu (104) est apte à mettre en oeuvre le processus de mise à jour de contenu après l'expiration du temps d'attente déterminé par le moyen de détermination de temps d'attente (109) dès lors que le terminal de communication retourne à l'état de communication activée.

2. Terminal de communication selon la revendication 1, comprenant en outre :
un moyen de détermination de restriction de communication,
où, dans un cas où le moyen de détermination de restriction de communication (110) détermine que le terminal de communication est soumis à une restriction de communication lorsque le moyen de détermination de temps (103) détermine qu'il a atteint un instant consistant en les premières informations temporelles et les secondes informations temporelles, le moyen de mise à jour de contenu (104) est apte à mettre en oeuvre le processus de mise à jour de contenu lorsqu'est atteint un instant indiqué par les secondes informations temporelles dès lors que la restriction de communication a été désactivée.

3. Procédé de mise à jour de contenu dans un terminal de communication (100), comprenant :
une étape de stockage de contenu consistant à stocker un contenu contenant des premières informations temporelles indiquant une unité de temps spécifiée d'informations représentant un instant ;
une étape de stockage d'informations de terminal consistant à stocker des informations de terminal contenant des secondes informations temporelles indiquant une unité de temps plus courte que l'unité de temps spécifiée et affectées au terminal de communication ;
une étape de détermination de temps consistant à déterminer si un instant constitué par les premières informations temporelles et les secondes informations temporelles a été atteint ; et
une étape de mise à jour de contenu consistant à mettre en oeuvre un processus de mise à jour de contenu lorsque la étape de détermination de temps détermine qu'il a atteint un instant consistant en les premières informations temporelles et les secondes informations temporelles ;
**caractérisé en ce que** :
les secondes informations temporelles sont affectées à l'instant d'une expédition d'usine du terminal de communication (100), ou générées de manière aléatoire lors du premier démarrage du terminal de communication (100) ;
le procédé de mise à jour de contenu comprenant en outre :
une étape de détermination d'état de communication consistant à déterminer si le terminal de communication (100) est dans un état de communication activée ;
une étape de génération de nombres aléatoires consistant à générer des nombres aléatoires ; et
une étape de détermination de temps d'attente consistant à déterminer un temps d'attente sur une durée spécifiée, sur la base des nombres aléatoires générés à l'étape de génération de nombres aléatoires ;
où, dans un cas où l'étape de détermination d'état de communication détermine que le terminal de communication (100) est dans un état de communication désactivée lorsque l'étape de détermination de temps détermine qu'il a atteint un instant consistant en les premières informations temporelles et les secondes informations temporelles, l'étape de mise à jour de contenu met en oeuvre le processus de mise à jour de contenu après l'expiration du temps d'attente déterminé par l'étape de détermination de temps d'attente dès lors que le terminal de communication (100) retourne à l'état de communication activée.
